# EUROPEAN PATENT SPECIFICATION

(11) **EP 4 367 407 B1**
(45) Date of publication and mention of the grant of the patent: **22.10.2025**
(21) Application number: 22747758.5
(22) Date of filing: 07.07.2022
(51) Int. Cl.: F16B 1/00, F16B 5/02, F16B 31/02

(54) **FASTENER, MONITORING METHOD AND SYSTEM**
BEFESTIGUNGSELEMENT, ÜBERWACHUNGSVERFAHREN UND SYSTEM
DISPOSITIF DE FIXATION, PROCÉDÉ ET SYSTÈME DE SURVEILLANCE

(30) Priority: 08.07.2021 IT 202100018041
(43) Date of publication of application: 15.05.2024
(73) Proprietor: SENS-IN S.r.l., 40068 San Lazzaro di Savena (BO) (IT)
(72) Inventor: POGGIPOLINI, Michele, 40068 San Lazzaro di Savena (BO) (IT)
(74) Representative: Studio Torta S.p.A.
(86) International application number: PCT/IB2022/056272
(87) International publication number: WO 2023/281429

(56) References cited:
- WO-A1-2018/030942
- US-B1- 8 521 448

## Description

### CROSS-REFERENCE TO RELATED APPLICATIONS

This Patent Application claims priority from Italian Patent Application No. 102021000018041 filed on July 8, 2021.

### TECHNICAL FIELD

This patent application for an invention relates to a fastener, a monitoring system and method.

It relates to a fastener, in particular a screw, which comprises one or more sensors so as to ensure, in addition to its function of fastening components of a mechanical apparatus, both the function of dynamically generating signals (in particular electromagnetic signals) based on the working conditions, namely the instantaneous use conditions of the fastener in combination with any physical phenomena that instantaneously cross the fastener, and the function of transferring these signals outside the fastener itself.

The fastener interacts remotely with a control system, so as to form a monitoring system for dynamically controlling the working conditions of the fastener itself.

A plurality of fasteners is able to remotely interact with a control system, so as to form a monitoring system for dynamically controlling the working conditions of a complex system of fasteners. For example, a plurality of fasteners may be applied to a complex mechanical apparatus (for example, an industrial machinery or engine) and, interacting with the control system, form a complex monitoring system able: to instantaneously detect predetermined working parameters of the mechanical apparatus; to predict any maintenance activities; and to signal any malfunctions. Therefore, a predictive monitoring system for the operation of a mechanical apparatus is provided.

### BACKGROUND OF THE INVENTION

The use of fasteners, in particular screws, to connect two or more components of a mechanical apparatus is known. The fasteners, in particular screws, are applied in many mechanical apparatuses.

In general, a fastener comprises a shank that constitutes the connecting/holding element, depending on the type of fastener. A shank may have a head or may cooperate with other components such as: nuts, washers, rings, or the like.
Some examples of fasteners include: the stud or the pulling screw (which in addition to the shank also comprises a head, which projects both axially and radially outside the shank). Other fasteners are also known, such as, for example, studs or special tension rods.

The present disclosure preferably relates to fasteners, in particular screws, made of a material that is lighter than steel and high performing (in general, for automotive and aerospace applications). For example, the present disclosure relates to fasteners made of a material with high mechanical and thermal resistance, for example, made of titanium alloy.

It is also known to provide sensors installed in fasteners; in any case, these sensors must be electrically powered. The fasteners of a known type that have sensors are used for tests, that is to say in conditions in which an operator has the chance to directly access the fastener.

It is also known, from US 10 055 623 B2, to use an adaptor with sensors to place between the fastener and a tightening tool so as to detect, during the tightening operation, the tightening torque applied.

This type of adaptor is configured to determine the static tightening force, i.e., the force with which the fastener has been tightened.

This type of known adaptor with sensors comprises a plurality of sensors disposed inside its body to detect the tightening torque; in addition, it must be able to transmit the tightening torque from the tool to the fastener without being damaged or deformed. Therefore, disadvantageously, this known type of adaptor with sensors is particularly bulky, as well as heavy, given that it must be made of metal to be able to ensure suitable resistance and torque transmission during tightening. In addition, this known type of adaptor with sensors enables the detection of the tightening torque only during tightening of the specific individual fastener.

In addition, it is known to make one-off detection measurements for maintenance and quality control activities, such as the detection of any fastener replacements. A fastener and monitoring method is known from WO 2018/030942 A1.

### SUMMARY OF THE INVENTION

The fasteners, in particular the screws, are subjected, during use, to high mechanical and thermal forces; therefore, they must have high mechanical resistance (and often thermal resistance too), so as to ensure resistance to fatigue and the correct operation, over time, of the mechanical apparatus in which they are applied.

Often, the fasteners, in particular the screws, are installed in positions subject to strong vibrations. For example, at the head of a combustion engine, or on vehicles in aeronautics or space applications, or on industrial machineries.

The fasteners of a complex system, such as a mechanical apparatus (for example, a piece of industrial machinery), of a known type, are not able to dynamically detect predetermined working conditions.

The fasteners of a known type do not enable predictive activities to program maintenance, as a function of the instantaneous working conditions of the mechanical apparatus itself. In this regard, it should be noted that, disadvantageously, in conventional mechanical apparatuses, the control of the state of the fasteners is carried out, during statistically programmed maintenance operations. In this case, then, the mechanical apparatus must be stopped for maintenance (control for re-tightening or replacing the fasteners) even if, in reality, it would not be necessary or, in the worst cases (for example if the mechanical apparatus is misused), during operations due to breakages or damage.

Advantageously, the fastener, according to the present disclosure, is configured to tighten bodies subject to strong dynamic stresses, namely vibrations and/or thermal stresses.

The purpose of the present invention is to provide a fastener, a monitoring system and method that enable the remote and dynamic - in other words, continuous - detection of predetermined working parameters.

The purpose of the present invention is to provide a fastener that is able to communicate with a control system remotely, namely without a wire connection.

The purpose of the present invention is to provide a monitoring system that can detect, remotely, signals generated by fasteners and to carry out monitoring of a mechanical apparatus, both in test and working conditions during the whole life of the mechanical apparatus.

The purpose of the present invention is to provide a monitoring system that can perform predictive activities for maintenance as a function of the actual working conditions of a mechanical apparatus.

According to the present invention, a monitoring method according to claim 1 is provided.

According to the present invention, a fastener, in particular a screw, according to claim 6 is provided.

According to the present invention, a monitoring system according to claim 14 is provided Particular embodiments of the invention are set out in the dependent claims.

### BRIEF DESCRIPTION OF THE DRAWINGS

The present invention will now be described with reference to the attached drawings that illustrate a non-limiting embodiment thereof, in which:
- Figure 1 illustrates, schematically, and partially in section, a monitoring system according to the present invention;
- Figures 2 and 3 illustrate, schematically, some details of Figure 1;
- Figure 4 illustrates, schematically, an additional example of a monitoring system according to the present invention; and,
- Figure 5 is a perspective view of a detail of a monitoring system according to the present invention.

### DETAILED DESCRIPTION OF THE INVENTION

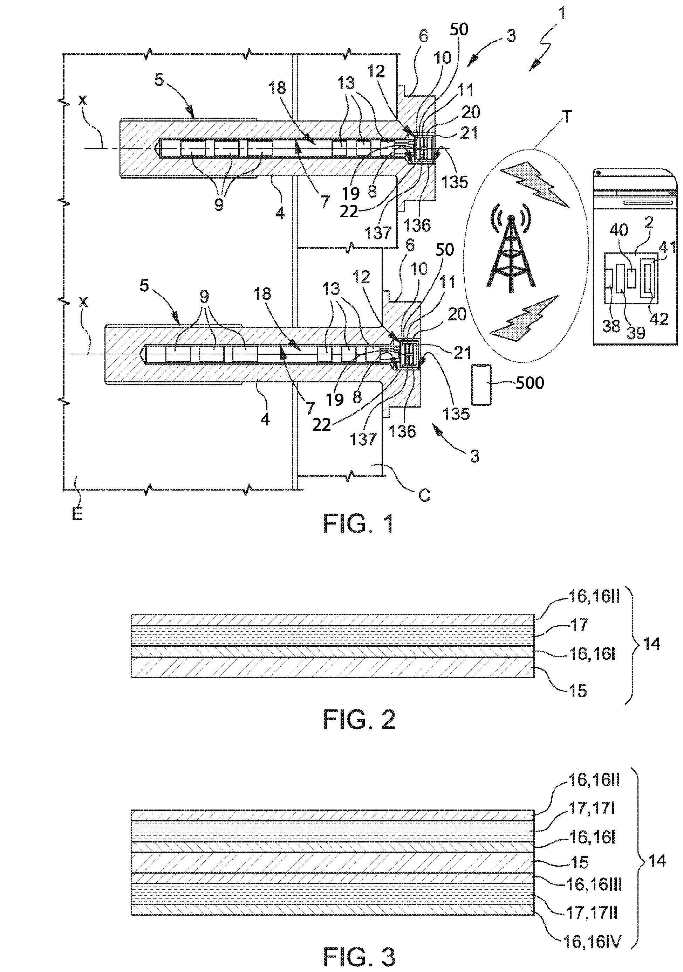

In Figure 1, the reference number 1 indicates, as a whole, a monitoring system according to the present invention.

The monitoring system 1 comprises a control system 2 and one or more fasteners 3.

Advantageously, the monitoring system 1 comprises, in addition, a recharge terminal 60 (as will be illustrated better below).

The expression "fastener" means an element configured to connect two or more mechanical components E, C of a mechanical apparatus. A fastener 3 is configured to be subjected, during use, to strong mechanical forces. For example, the fastener 3 is configured to tighten bodies subject to strong dynamic stresses, namely vibrations, and/or thermal stresses.

Advantageously, the fastener 3 is configured to resist high temperatures, in particular temperatures above the melting point of steel, such as, for example, temperatures above 1300 °C.

Advantageously, the fastener 3 is made of a material that has high mechanical resistance. Merely by way of non-limiting example, the fastener 3 is made of metal, such as: steel alloys, titanium alloys, or equivalent materials.

According to the schematic example illustrated in Figure 1, the fastener 3 is a screw comprising a shank 4 having a longitudinal axis X. The shank 4 is basically cylindrical in shape and has threading 5. According to the example illustrated, the threading 5 is external, namely it is made on a respective external portion of the shank 4. The screw 3 comprises a head 6, configured to interact with a tightening element.

Without losing generality, and according to variants not illustrated, the fastener 3 may be a different kind. For example, the fastener may be a stud, or a tension rod, or it may be paired with a nut to form a bolt. For example, according to the present invention, the following may be considered as fasteners: rivets, screws, tie rods, or the like.

According to the example illustrated, in Figure 1, the fastener 3 has a cavity 7 and a housing 8. The cavity 7 is made along the shank 4 and faces the outside of the screw 3 through the housing 8. The cavity 7 is coaxial to the longitudinal axis X. The housing 8 is mainly made inside the head 6. The cavity 7 preferably, but without limits, has a circular cross-section.

Here below, without losing generality, reference will be made to a screw 3 as a fastener.

The screw 3 comprises, in addition, one or more sensors 9. One or more sensors 9 are arranged inside the cavity 7.

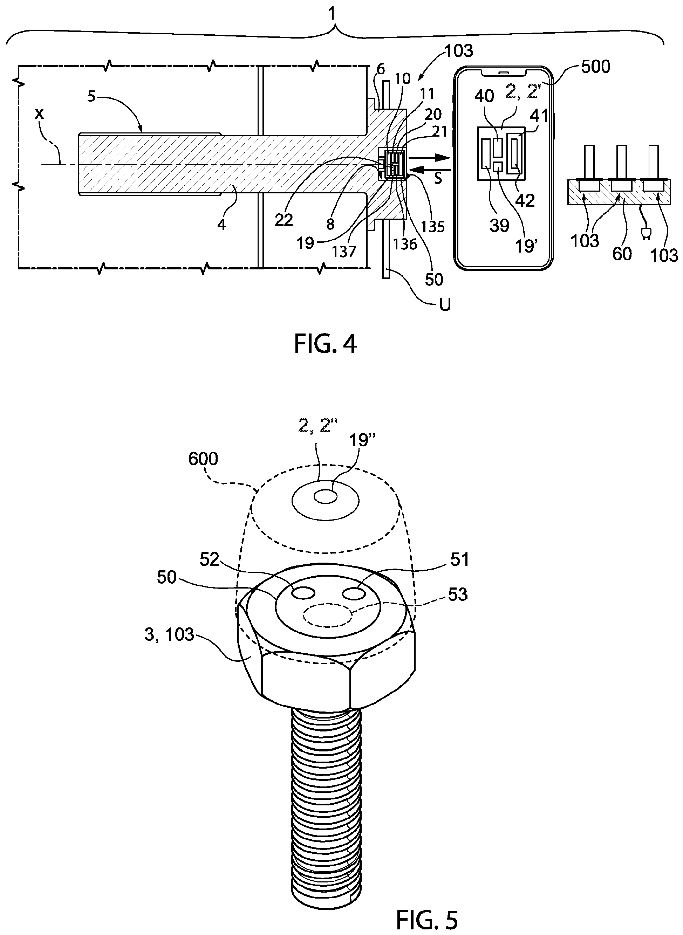

Figure 4 illustrates, with 103, a variant of the screw 3. In Figure 4, the components in common with the screw 3 maintain the same numbering and are to be considered as included here without repeating them (for brevity's sake). The shank 4 of the screw 103 is solid; in other words, it does not have the cavity 7. In this case, the sensors 9 may be inserted inside the housing 8, or be arranged, at least partially, outside the screw 103. According to a variant not illustrated, one or more sensors 9 are positioned outside the screw 3 or 103.

The screw 3 or 103 comprises a microprocessor 10. The screw 3 or 103 comprises a wireless rechargeable battery 11. The wireless rechargeable battery 11 and the microprocessor 10 are preferably integrated into a printed circuit board 12.

Advantageously, the screw 13 or 103 comprises an energy harvesting system 13. The energy harvesting system 13 is configured to transform an energy source into electricity with which to directly supply the sensors 9 and/or the printed circuit board 12 and/or the wireless rechargeable battery 11. Typical examples of energy sources include: solar energy (internal or external light source), mechanical energy (vibrations, sound waves, currents, human movement); thermal energy (temperature gradient); electromagnetic waves.

The energy harvesting system 13 may be arranged inside the cavity 7 and/or the housing 8. According to one variant not illustrated, the energy harvesting system 13 may be positioned outside the body of the screw 3.

Advantageously, the screw 3 may comprise a plurality energy harvesting systems 13, including different kinds of ones. An energy harvesting system 13 may be chosen from within a group of energy harvesting systems 13 that are different according to the type of source of energy that is converted into electricity. For example, an energy system 13 may be, by choice, a system for converting one or a combination of the following sources of energy: mechanical energy, in particular kinetic energy and/or potential energy; electromagnetic energy; thermal energy; chemical energy; gravitational energy; atomic energy.

Each energy harvesting system 13 comprises, generally, a piezoelectric transducer 14 configured to transform an energy source that strikes it into electricity. Each energy harvesting system 13 may comprise a plurality of piezoelectric transducers 14.

Each transducer 14 may be chosen from within a group of piezoelectric transducers that are different, according to the energy source.

In Figures 2 and 3, sections of piezoelectric transducers 14 are illustrated schematically, by way of non-limiting example.

A piezoelectric transducer 14 generally comprises a wafer structure composed, in order, of the following sequence of components:
- a substrate 15;
- an electrode 16I;
- a layer of piezoelectric material 17;
- an additional electrode 16II.

Advantageously, the substrate 15 is made of elastic material; in this way, the piezoelectric transducer 14 has, in turn, good elasticity.

Advantageously, the substrate 15 is made, at least partially, of: brass and/or carbon fibre and/or stainless steel and/or non-magnetic material such as brass with silver.

The layer of piezoelectric material 17 may be made of inorganic and/or organic material. The inorganic substrate 15 may comprise single-layer or multi-layer ceramic. The layer of piezoelectric material 17 may comprise one or more of these materials: PZT, ZnO, SnO, PVDF, P(VDF-FrFE), or other, equivalent materials.

If a piezoelectric transducer 14 is deformed, as illustrated, a potential difference is generated between the two electrodes 16I and 16II so as to generate electricity as a result.

Advantageously, the fact that the piezoelectric transducer 14 is made of elastic material makes it possible for the piezoelectric transducer 14 to vibrate according to its own natural way when subject to an external force. This makes it possible to prolong the generation of electricity, including when the external force that generated the activation of the piezoelectric transducer 14 stops.

Figure 3 illustrates a double-layer piezoelectric transducer 14 i.e., with electrodes 16 and a layer of piezoelectric material 17 arranged on both sides of the substrate 15.

If the piezoelectric transducer 14 is deformed, a potential difference is generated between the two electrodes 16 so as to generate electricity as a result.

Advantageously, the piezoelectric transducer 14 made of elastic material can vibrate according to its own natural way when subject to an external force. This makes it possible to prolong the generation of electricity, including when the external force that generated the activation of the piezoelectric transducer 14 stops.

The electrodes 16 are at least partially made of electrically conductive material. The electrodes 16 may be connected together in series or in parallel.

According to a variant not illustrated, the piezoelectric transducer 14 may have a coating made of insulating material. The insulating material may be electrically and/or thermally insulating and/or water-proof.

Therefore, a substrate 15 of this type is suitable for an application in which the piezoelectric transducer 14 is subject to strong and frequent vibrations. In addition, the value of the density above 5 g/cm³, in particular above 6 g/cm³, preferably above 8 g/cm³, makes it possible to obtain wider oscillations and, as a result, greater deformation of the layer of piezoelectric material 17 during use.

When an external force causes the deformation, in particular the vibration, of the layer of piezoelectric material 17 of a piezoelectric transducer 14 of the type described above, a difference in voltage is generated between the electrodes 15.

The electrodes 16 may be connected to an electrical circuit 18 (illustrated schematically) and, via this, to one or more sensors 9 and/or to the printed circuit board 12 and/or to the wireless rechargeable battery 11.

Advantageously, each energy harvesting system 13 makes it possible to generate electricity to directly supply the sensors 9 and/or the printed circuit board 12 and/or the wireless rechargeable battery 11. In this way, advantageously, the screw 3 does not need batteries or wired connections to supply the screw 3 with electricity. In this way, advantageously, the screw 3 of the type described above, may have a plurality of different applications in the sector of dynamic and predictive diagnostics and monitoring of mechanical apparatuses.

Advantageously, a screw 3 of the type described above can also act as a bridge for external sensors 9 positioned in difficult-to-access areas. In this way, the screw 3 can operate both to supply electricity to an external sensor 9 and as a terminal device for wirelessly transferring data.

Advantageously, the sensors 9 are miniaturised.

Each sensor 9 may be chosen from within a group of sensors that are different according to the type of signals detected as a function of respective operating parameters. For example, the sensors 9 may be for: acceleration, temperature, pressure, voltage, humidity, inclination, thermal flow, and equivalent solutions. Each sensor 9 may be chosen from within a group of sensors that are different according to the type of sensitive elements. For example, the sensors 9 may be strain gauges, thermocouples, humidity sensors, fibre-optic sensors, and equivalent.

In the case of a fibre-optic sensor 9, the screw 3 also comprises a light source (not illustrated) that cooperates with the fibre-optics sensor. Advantageously, the light source is powered by electricity generated by energy harvesting systems 13.

Without losing any generality, the printed circuit board 12 comprises an electrical interface 20 that is connected to sensors 9 and/or to energy harvesting systems 13 and/or to an external accumulator, if present.

According to the example illustrated in Figures 4 and 5, the screw 103 preferably comprises a case 50 wherein the printed circuit board 12 and one or more sensors 9, in particular an accelerometer, are inserted. The case 50 is inserted inside the housing 8. The case 50 is, preferably, entirely housed inside the head 6 of the screw 103. In any case, without any loss of generality, the case 50 may protrude, at least partially, outside the housing 8.

Advantageously, the case 50 is made, at least in part, of dielectric material, for example it is made of polymer material, so as not to shield the electromagnetic signals during use. Advantageously, the case 50 is stiff, namely not elastically deformable.

The case 50 may comprise parts made of other materials. By way of non-limiting example, the case 50 may comprise a part made of metal facing the shank 4 and any external sensors 9 (if it is installed on a screw 3 as illustrated in Figure 1) and a part of polymer material facing the outside of the screw 103.

According to what is illustrated in Figure 5, the case 50 may comprise one or more LEDs 51 and 52 (according to the example illustrated, there are two LEDs, but without losing any generality the number and the arrangement of the LEDs may be of any kind) visible from the outside of the screw 103. Advantageously, the LEDs are configured to externally communicate any predetermined conditions of the printed circuit board 13 (switched on, switched off, charging, etc.).

The case 50 preferably has an area 53 of interaction with the user, for example even just the free surface of the case 50 itself accessible by the user. So that a user may tap on the case 50 with their fingers. In this way, the vibrations imparted to the case 50 are detected by the accelerometer 9. Advantageously, the printed circuit board 12 may comprise an RFID tag 21 or a device suitably programmed to identify and trace the corresponding screws 3 or 103.

Advantageously, the printed circuit board 12 comprises one or more additional electronic parts chosen from the following group of electronic parts:
- an electronic part for amplifying/conditioning 135 the signal; and
- an electronic part 136 for storage.

The printed circuit board 12 also incorporates:
- a wireless communication portion 137, namely in wireless mode.

The wireless communication portion 137 is configured to exchange data, in particular to transmit and receive data and electromagnetic signals S, with the control system 2 directly and/or indirectly, namely through a transport network T.

The expression "exchange data and electromagnetic signals S directly" means an exchange of data and electromagnetic signals S between the control system 2 and the wireless communication portion 137 without the interposition, namely without crossing, a public or private transport network T.

The expression "exchange data and electromagnetic signals S indirectly" means an exchange of data and electromagnetic signals S between the control system 2 and the wireless communication portion 137 via a public or private transport network T.

The wireless communication portion 137 of the printed circuit board 12 comprises a transmitter/receiver 19 produced according to the Near Field Communication (NFC) standard for the direct exchange of data and electromagnetic signals S with the control system 2, in particular the control system 2' as illustrated in detail in Figure 4 and as will be illustrated better below.

The NFC transmitter/receiver 19 is connected to the wireless rechargeable battery 11 and comprises a take-up spool (not illustrated) that can be activated by an electromagnetic signal S emitted, for example, by the control system 2, in particular the control system 2' (Figures 4 and 5).

The wireless rechargeable battery 11 of the printed circuit board 12 can be recharged without using cables or connectors, namely it is wireless. The rechargeable battery 11 has a suitable capacity to power the printed circuit board 12 and the sensors 9 of the screw 3 or 103.

For example, the rechargeable battery 11 may have an autonomy ranging between 30 and 1000 mAh.

The NFC transmitter/receiver 19 of the screw 3 or 103 is able to exchange data and electromagnetic signals S with other NFC transmitters/receivers 19' of other devices. Advantageously, the NFC transmitter/receiver 19 of the screw 3 or 103 communicates with the NFC transmitter/receiver 19' of a smartphone/tablet or similar devices (Figure 4).

In general, the wireless communication portion 137 of the screw 3 or 103 may comprise one or more of the following communication systems:
- near wireless (that operates, in general, in the space of a few millimetres), for example with the inductive or capacitive principle (such as, for example, the use of the NFC transmitter/receiver 19, 19', 19''); and/or
- radio frequency (which extends, in general, up to a few metres), for example a Bluetooth system, in particular of the type known as Bluetooth Low Energy (BLE) or wi-fi; and/or
- optical, for example an infrared system; and/or
- a mobile terminal device, namely a radio interface, for radiotelephony communication on the radio interface to access one or more transport networks T, in particular telecommunications networks, for example: fixed telephone network, cellular telephone network, data network, internet network, GSM, GPRS, UMTS/EDGE, VSF-Spread, OFDM, GPS.

If the wireless communication portion 137 comprises a mobile terminal device, the latter comprises, in turn, an actual or virtual SIM card 22 (also commercially know as an eSIM^{®}, namely embedded SIM) for accessing transport networks T of specific telephone operators and/or accessing the internet and the cloud.

The printed circuit board 12 is configured to collect and convert the signals received by the sensors 9 into data referring to parameters, that are a function of the working conditions of the screw 3. The printed circuit board 2 is able to process the data according to predefined logics.

The printed circuit board 12 exchanges data with the control system 2 via the wireless communication portion 137.

According to the example illustrated in Figure 1, advantageously, the wireless communication portion 137 of the screw 3 or 103 comprises both an NFC transmitter/receiver 19 and an actual or virtual SIM card 22 (commercially also known as an eSIM^{®}).

Advantageously, but without imposing limits, the case 50 and the related printed circuit board 12 are miniaturised so as to be entirely housed within the screw 3 or 103. According to one variant not illustrated, the case 50 and the related printed circuit board 12 may protrude, at least in part or completely, outside the screw 3 or 103. In this way, the case 50 is able to house components that cannot be miniaturised below the limit dimensions that permit the housing thereof within the screw 3. The solution with the case 50 that protrudes at least partially outside the fastener 3 may be acceptable in those applications, for example, on industrial machineries, where it is possible to house fasteners 12 with dimensions that are greater than the standard ones.

The control system 2 comprises, in turn: a known system for supplying electricity (for example, a plug for connecting to an electricity network and/or a battery and/or another electronic device); a unit for exchanging data and electromagnetic signals 38 with the outside (for example, a connection port); a storage unit 39; a calculation unit 40; and a data management unit 41 that is configured to exchange data outside of the control system 2, for example with a user.

Within the control system 2, the storage unit 39 is configured to connect and store one or more working parameters of one or more fasteners 3. The working parameters may be considered to include, for example: the tightening torque applied to the fastener; the axial compression or tension applied instantaneously along the shank of a screw; the temperature at which fastening occurs; the instantaneous operating temperature; the electrical charge level of the accumulation unit; any operating vibrations; instantaneous operating forces on planes transverse to the longitudinal axis X of the screw such as, for example, torsion and/or cutting.

The calculation unit 40 is configured to process the data exchanged. In particular, the calculation unit 40 is able to automatically detect, for each screw 3 of a mechanical apparatus, the instantaneous value: of the axial force developed in each screw; of any operating vibrations; of any hazardous conditions such as unscrewing and/or excessive bending and/or excessive torsion and/or exceeding a limit operating temperature.

The calculation unit 40 exchanges data with the storage unit 39 and the data management unit 41.

The data management unit 41 may be produced in a plurality of different ways. According to what is illustrated in Figure 1, the data management unit 41 comprises a user interface 42, for example a display, for exchanging input and output data with the user.

According to a variant not illustrated, the user interface 42 is an application (generally also known as an app) for mobile devices, in particular installed on the receiving terminal device. Advantageously, the data management unit 41 is a mobile device. For example, the data management unit 41 is a smartphone, a tablet, and/or a computer.

Figure 4 illustrates, with 2', a variant of the control system 2. The components in common with the control system 2 maintain the same numbering and are to be considered as included here for brevity.

Advantageously, according to the example illustrated in Figure 4, the control system 2' comprises an NFC transmitter/receiver 19' that may already be present or else integrated in a pre-existing mobile device 500, like a smartphone (example illustrated with the number 500 in Figure 4) or a tablet. Advantageously, the control system 2' interacts with the electronics of the mobile device 500 on which a dedicated application for permitting the operation of this application and the exchange of information with the user, via the mobile device 500, is installed. Figure 5 illustrates, with 2'', an additional variant of the control system 2. The components in common with the control system 2 maintain the same numbering and are to be considered as included here for brevity.

Advantageously, according to the example illustrated in Figure 5, the control system 2'' comprises an NFC transmitter/receiver 19'', which is integrated into a mobile device 600 with smaller dimensions, which can be easily transported and positioned on a vehicle or near a mechanical apparatus. Advantageously, the mobile device 600 that integrates the control system 2'' may have, as its main purpose, that of recharging the rechargeable batteries of the screw 3 or 103. Therefore, the mobile device 600 may not have a user interface. Advantageously, the transmitter/receiver 19'' has a recharge power of at least 10 W.

In use, one or more fasteners 3 according to the present invention are installed on board a mechanical apparatus so as to perform the function of mechanically coupling two or more parts of the mechanical apparatus.

When fastened to the mechanical apparatus, the fasteners 3 are already equipped with one or more sensors 9, energy harvesting systems 13 (if present) and the printed circuit board 12. It is possible that the fastener 3 performs the function of a bridge element with an external sensor 9. In this case, the connections with the external sensor 9 and/or the energy harvesting systems 13 (if present) and/or the printed circuit board 12 may be produced at a different time.

When fastening the fasteners 3 or 103, the installation parameters may be detected and stored.

Advantageously, the printed circuit board 12 comprises a wireless communication portion 137 that exchanges data and electromagnetic signals S relating to one or more conditions of use, in particular working parameters, of the fasteners 3 with the control system 2.

The control system 2 exchanges data and electromagnetic signals S with the wireless communication portion 137 and with a user. The control system 2 may integrate software, or apps, to manage and process the data.

If the fastener 3 or 103 comprises a mobile terminal device (namely a radio interface, for communication in radiotelephony on the radio interface for accessing one or more transport networks T, for example: fixed telephone network, cellular telephone network, data network, internet network, GSM, GPRS, UMTS/EDGE, VSF-Spread, OFDM, GPS), it comprises a SIM card 22 that is able to communicate through one or more transport networks T with the receiving terminal device of the control system 2. In this way, advantageously, each fastener 3 is able to communicate remotely with the control system 2.

In this way, advantageously, the monitoring system 1 according to the present invention (namely the set of the screws 3 or 103 in combination with the control system 2) is able to remotely detect the operation of the fasteners 3 or 103 installed on board a mechanical apparatus.

In addition, the control system 2 is able to store operating conditions (any alarms), to detect working parameters, and to carry out predictive activities, so as to schedule the maintenance activities of the fasteners 3 or 103.

Advantageously, if the control system 2' is part of a mobile device, like a smartphone 500, the activation of the printed circuit board 12 of the screw 3 or 103 and the exchange of data and electromagnetic signals S may also occur when fastening the screw 3 or 103 with a conventional tool U (schematically shown in Figure 4), for example a torque wrench. This makes it possible to use known tools, commonly used and already in possession of the end user, for fastening the screws 3 or 103. In addition, these tools are not attached to the monitoring system 1, so that they are entirely irrelevant for the purposes of the method and correct operation of the monitoring system 1 as these tools U are placed and handled by the users.

According to an additional variant not illustrated, the control system 2' is integrated within a tool U used to tighten the screws 3 or 103.

Following or during the fastening of one or more screws 3 or 103, it is possible to detect, instantaneously, one or more working parameters of each screw 3 or 103.

The application of the NFC transmitter/receiver makes it possible to wirelessly recharge the rechargeable battery 11 while the exchange of signals is performed between the screw 3 or 103 and the mobile device 500.

Advantageously, the monitoring system 1 comprises a recharge terminal 60, in particular a hardware platform, which is able to issue electromagnetic signals S to wirelessly recharge the rechargeable battery 11 of one or more screws 3 or 103 (including at the same time). In this case, it is possible to provide for the recharging of the screws 3 or 103 with the recharge terminal 60 before fastening them to the mechanical apparatus or when needed. Advantageously, the recharge terminal 60 is also configured to exchange data with the screws 3 or 103, this can also happen during recharging. The recharge terminal 60 is also configured to store and manage the data exchanged with the screws 3 or 103.

If the screws 3 or 103 are already installed on a mechanical apparatus and it is not easy to remove them from their position to recharge them, advantageously, it is possible to use a mobile device 600 that comprises an NFC transmitter/receiver 19'' with a recharge power greater than that of an NFC transmitter/receiver 19' that a smartphone or a tablet may have. The NFC transmitter/receiver 19'' of the mobile device 600 is preferably able to transmit an electromagnetic recharge signal S with a power of at least 10 W; in this way, advantageously, the mobile device 600 is able to quickly recharge the rechargeable battery 11.

Advantageously, a screw 3 or 103 may comprise both an NFC transmitter/receiver 19 and an actual or virtual SIM card 22 and a Bluetooth radio interface (BLE). In this case, advantageously, the NFC transmitter/receiver 19 makes it possible to recharge the rechargeable battery 11 and the short-distance communication with mobile devices 500 (for example, smartphones or tablets); while the actual or virtual SIM card 22 and/or the Bluetooth (BLE) radio interface enables communication with remote control systems 2. This double possibility for control enables both the short-distance communication with the user that carries out the operation and the contemporaneous communication and management of the same piece of data with a control system 2 placed remotely (for example a centralised control unit).

If present, advantageously, the energy harvesting systems 13 transform sources of external energy into electricity for directly supplying the sensors 9 and/or the printed circuit board 12 or the accumulation unit 11.

Each sensor 9 detects signals relating to respective working conditions and, via the electrical circuit 18 (illustrated schematically) of the fastener 13, exchanges the signals with the printed circuit board 12, which processes the signals. The printed circuit board 12 comprises, for example, a microprocessor 10 and other electronic components for managing and processing signals sent as input by the sensors 9.

It should be observed how the monitoring system 1 according to the present invention can operate continuously or at predetermined intervals or only under predetermined use conditions. For example, if certain energy sources are released during particular events (such as malfunctions, for example in the presence of an excess of vibrations and/or thermal flow or the like), these events are able to supply the energy harvesting system 13 and, as a result, generate electricity to supply the sensors 9 and/or the accumulation unit 11 and/or the printed circuit board 12 for transmitting alert signals, potentially in combination with the transmission of detected working parameters.

According to what has been illustrated, the monitoring system 1 according to the present invention makes it possible to install sensors 9 inside a mechanical apparatus exploiting the housings already envisaged for mechanical couplings via screws, bolts, tension rods, or equivalent elements.

In other words, it is possible to equip mechanical apparatuses with sensors without needing to increase the dimensions thereof or provide for specific seats for any sensors that, unlike fasteners, do not have mechanical features such as to be able to perform the function of connecting element between two mechanical components.

This makes it possible to simply the design of many mechanical apparatuses and to be able to position, in some cases, the sensors 9 right at the critical points of the mechanical apparatus, for example the same mechanical coupling points in which the screws are positioned.

In addition to the above, the monitoring system 1 of the type described above makes it possible to use the screws 3 according to the present invention as a bridging element to connect with sensors 9 that may be positioned outside the screws 3 and in areas that are difficult to reach in other ways. In other words, the screws 3 according to the present invention advantageously permit the supply and transmission of sensor signals that are difficult to wire according to the known methods).

The monitoring system 1 of the type described above makes it possible to completely eliminate wires and connectors for connecting screws 3 with the control system 2 and/or an external electric supply unit.

The monitoring system 1 of the type described above makes it possible to detect, remotely and in real time, a plurality of instantaneous use parameters of the screws 3 installed on a mechanical apparatus. This makes it possible to have a precise and targeted control of predetermined working parameters and to be able to: effectively program the maintenance activities; detect any malfunctions.

The monitoring system 1 according to the present invention, makes it possible to replace the scheduled maintenance activities based on statistical predictions with activities scheduled based on the operating parameters detected via the monitoring system 1. In this way, advantageously, it is possible to reduce the frequency and costs of maintenance, limiting operations only to when it is necessary to again tighten the screws, or make replacements.

The monitoring system 1 of the type described above makes it possible to use renewable energy, supplying all the sensors 9 and the printed circuit board 12 via transformation of one or more energy sources into electricity. In this way, the monitoring system 1 is highly sustainable.

The monitoring system 1 makes it possible, in addition, to reduce the weight of conventional mechanical apparatuses, since the materials used tend to be lighter compared to those of conventional screws; in addition, the fasteners 3 incorporate sensors 9 and the miniaturised printed circuit board 12 with a reduction in weight, bulk, and wiring structures compared to solutions in which conventional sensors are used.

According to the solution illustrated in Figure 4, the screw 103 advantageously has a solid shank 4, namely without cavities. In this case, the resistant section of the shank 4 of the screw is maximal and ensures the maximum mechanical resistance, especially to fatigue. This type of application is preferable in those contexts in which screws are subject to strong forces, in particular to fatigue. In other words, this solution is of advantageous application in so-called "critical" screws, namely screws subject to strong stresses during use.

Advantageously, according to the solution illustrated in Figure 4, all the electronic components, sensors 9 included, are inserted inside the case 50, which, in turn, is at least in part housed in the head 6 of the screw 103. Given that the head 6 is the part under the least mechanical stress, this makes it possible to ensure greater resistance of any electronic components such as, for example: accelerometers, temperature and pressure sensors, etc.

Advantageously, the solution illustrated in Figure 4 is particularly compact and simple to assemble and definitively eliminates all the electrical connection issues present in the solutions in which the screw 3 has the shank 4 drilled to house electronic components like sensors 9 or energy harvesting system 13.

Advantageously, the fact that a screw 3 or 103 according to the present invention is without connectors ensures greater resistance to external agents and, potentially, atmospheric ones compared with known solutions in which there are connectors for the electrical connection with readers.

## Claims

1. A monitoring method by means of a monitoring system (1) comprising a first terminal device (2; 2'; 2'') and a second terminal device (3; 103); wherein said second terminal device (3; 103) comprises a fastener, in particular a screw, which fixes together, in use, two or more components (E, C) of a mechanical apparatus; wherein said second terminal device (3; 103) comprises one or more sensors (9) and a printed circuit board (12) comprising, in turn, a microprocessor (10) and a wireless communication portion (137), which is configured to wirelessly exchange data and electromagnetic signals (S) with the first terminal device **(2; 2';** 2'') directly and/or indirectly, namely via a transport network (T), in particular a telecommunications network; wherein said sensors (9) exchange signals with said printed circuit board (12) of the second terminal device (3; 103); the method comprising the steps of: generating one or more signals by means of said sensors (9) in function of the working conditions of said components (E, C) of a mechanical apparatus; processing said signals by means of said printed circuit board (12) to generate data; exchange data wirelessly between the first terminal device (2; 2'; 2'') and the second terminal device (3; 103) directly and/or indirectly, namely via a transport network (T), in particular a telecommunications network; wherein said first terminal device (2') comprises a first NFC transmitter/receiver (19'); in particular, said first terminal device (2') is included in a smartphone or a mobile device (600) or a tool, in particular a tool (U) for tightening said second terminal device (3; 103); wherein said wireless communication portion (137) of the second terminal device (3; 103) comprises, in addition, a wireless rechargeable battery (11) and a second NFC transmitter/receiver (19) that is connected to the rechargeable battery (11) and receives both electromagnetic power and data from the first NFC transmitter/receiver ('19); wherein the step of exchanging data comprises the sub-steps: interrogating the second terminal device (3; 103) via the first terminal device (2'); responding to the first terminal device (2') with the second terminal device (3; 103); **characterized in that**, during the sub-steps of interrogating and/or responding, the electromagnetic signal (S) generated by the first terminal device (2') wirelessly charges the rechargeable battery (11) of the second terminal device (3; 103).

2. A method according to claim 1, wherein the monitoring system (1) comprises a plurality of said second terminal devices (3; 103), wherein each second terminal device (3; 103) exchanges data with the first terminal device (2; 2'; 2") through a respective wireless communication portion (137).

3. A method according to any of the preceding claims, wherein the monitoring system (1) comprises a third terminal device (60; 600), which comprises a third NFC transmitter/receiver (19"); in particular, said third terminal device (60) comprises a hardware platform configured to recharge the second terminal device (3; 103); preferably, said hardware platform is also configured to exchange data with said second terminal device (3; 103).

4. A method according to any of the preceding claims, wherein said wireless communication portion (137) comprises a mobile terminal device, in particular a radio interface like Bluetooth or an actual or virtual SIM card (22), configured to communicate with the interface access of a transport network (T), in particular a telecommunications network; in particular, the transport network (T) is a network chosen between: fixed telephone network, cellular telephone network, data network, internet network, GSM, GPRS, UMTS/EDGE, VSF-Spread, OFDM, GPS.

5. A method according to any of the preceding claims, wherein each fastener (3; 103) comprises an energy harvesting system (13) which is configured to convert into electrical energy an energy source; wherein said printed circuit board (12) is electrically powered by said energy harvesting system (13); in particular, said printed circuit board (12) is disposed, at least partially, within a housing (7, 8) of the fastener (3; 103).

6. A fastener, in particular a screw, which can fix together, in use, two or more components (E, C) of a mechanical apparatus; wherein said fastener (3; 103) comprises a printed circuit board (12) connected to one or more sensors (9), each of which generates signals in function of the working conditions of said components (E, C) of a mechanical apparatus; wherein said printed circuit board (12) comprises a microprocessor (10), a wireless rechargeable battery (11), and a wireless communication portion (137) that is configured to exchange, in use, data and electromagnetic signals (2) wirelessly with a terminal device (2; 2'; 2'') directly and/or indirectly, namely through a transport network (T), in particular a telecommunications network; wherein, said wireless communication portion (137) comprises an NFC transmitter/receiver (19) that is connected to the rechargeable battery (11) and is configured to receive, in use, both electromagnetic power and data from other NFC transmitter/receivers (19'; 19'') of other devices, wherein the fastener is the fastener used in the monitoring method according to any of the preceding claims.

7. A fastener, in particular a screw, according to claim 6, wherein said wireless communication portion (137) comprises a mobile terminal device, in particular a radio interface, such a Bluetooth BLE or an actual or virtual SIM card (22), which is configured to communicate with the interface access of a transport network (T), in particular telecommunications networks.

8. A fastener, in particular a screw, according to claim 7 wherein said radio interface is configured to access a transport network (T), in particular a network chosen between: fixed telephone network, cellular telephone network, data network, internet network, GSM, GPRS, UMTS/EDGE, VSF-Spread, OFDM, GPS.

9. A fastener according to any of the claims from 6 to 8 and comprising one or more energy harvesting systems (13) each of which is configured to convert into electrical energy an energy source; wherein each energy harvesting system (13) powers said sensors (9) and/or said printed circuit board (12) and/or a storage unit (11).

10. A fastener according to any of the claims from 6 to 9 and comprising a shank (4) having a longitudinal axis (X) and a head (6) having a housing (8); wherein said fastener (3; 103) comprises a hermetic case (50) made of stiff material and at least partially dielectric; which is inserted inside said housing (8); wherein said printed circuit board (12) is inserted inside said case (50); wherein inside said case (50) one or more sensors (9) are housed, in particular and accelerometer.

11. A fastener according to claim 10 wherein said case (50) comprises LEDs (51, 52) that are visible from the outside and are connected, internally, to said printed circuit board (12).

12. A fastener according to claim 10 or 11, wherein the shank (4) is solid, namely does not have internal cavities.

13. A fastener according to any of the claims from 6 to 12, wherein said fastener has a cavity (7, 8) inside the shank (4); wherein, inside said cavity (7, 8), the following are at least partially housed: said sensors (9); and/or said energy harvesting systems (13); and/or said printed circuit board (12).

14. A monitoring system comprising a first terminal device (2; 2'; 2'') and one or more second terminal devices (3; 103), each of which is a fastener according to any claim from 6 to 13; wherein the first terminal device (2; 2'; 2") and each second terminal device (3; 103) are configured to exchange data and electromagnetic signals (S) wirelessly directly and/or indirectly, namely via a transport network (T), in particular a telecommunications network; wherein the electromagnetic signal (S) generated by the first terminal device (2') wirelessly charges the rechargeable battery (11) of the second terminal device (3; 103).

15. A monitoring system according to claim 14 and comprising a third terminal device (60; 600) which comprises an additional NFC transmitter/receiver (19").

16. A monitoring system according to claim 15, wherein said third terminal device (60) comprises a hardware platform that is configured to recharge the second terminal device (3; 103); preferably, said hardware platform is also configured to exchange data with said second terminal device (3; 103).

17. A monitoring system according to any claim from 14 to 16, wherein said first terminal device (2; 2'; 2") is included in a smartphone or a mobile device (600) or a tool, in particular a tool (U) for tightening said second terminal device (3; 103).

## Patentansprüche

1. Überwachungsverfahren mittels eines Überwachungssystems (1), das ein erstes Endgerät (2; 2'; 2'') und ein zweites Endgerät (3; 103) umfasst; wobei das zweite Endgerät (3; 103) ein Befestigungselement, insbesondere eine Schraube, umfasst, das im Gebrauch zwei oder mehrere Komponenten (E, C) einer mechanischen Vorrichtung miteinander befestigt; wobei das zweite Endgerät (3; 103) einen oder mehrere Sensoren (9) und eine Leiterplatte (12) umfasst, die ihrerseits einen Mikroprozessor (10) und einen drahtlosen Kommunikationsabschnitt (137) umfasst, der konfiguriert ist, um drahtlos Daten und elektromagnetische Signale (S) mit dem ersten Endgerät (2; 2'; 2'') direkt und/oder indirekt, nämlich über ein Transportnetzwerk (T), insbesondere ein Telekommunikationsnetzwerk, auszutauschen; wobei die Sensoren (9) Signale mit der Leiterplatte (12) des zweiten Endgerätes (3; 103) austauschen; wobei das Verfahren die folgenden Schritte umfasst: Erzeugen eines oder mehrerer Signale mittels der Sensoren (9) in Abhängigkeit von den Arbeitsbedingungen der Komponenten (E, C) einer mechanischen Vorrichtung; Verarbeiten der Signale mittels der Leiterplatte (12), um Daten zu erzeugen; drahtloses Austauschen von Daten zwischen dem ersten Endgerät (2; 2'; 2'') und dem zweiten Endgerät (3; 103) direkt und/oder indirekt, nämlich über ein Transportnetzwerk (T), insbesondere ein Telekommunikationsnetzwerk; wobei das erste Endgerät (2') einen ersten NFC-Sender/Empfänger (19') umfasst; insbesondere ist das erste Endgerät (2') in einem Smartphone oder einem mobilen Gerät (600) oder einem Werkzeug, insbesondere einem Werkzeug (U) zum Festziehen des zweiten Endgerätes (3; 103), enthalten; wobei der drahtlose Kommunikationsabschnitt (137) des zweiten Endgerätes (3; 103) zusätzlich eine drahtlose wiederaufladbare Batterie (11) und einen zweiten NFC-Sender/Empfänger (19) umfasst, der mit der wiederaufladbaren Batterie (11) verbunden ist und sowohl elektromagnetische Energie als auch Daten von dem ersten NFC-Sender/Empfänger (19) empfängt; wobei der Schritt zum Austauschen von Daten die Teilschritte umfasst: Abfragen des zweiten Endgerätes (3; 103) über das erste Endgerät (2'); Beantworten des ersten Endgerätes (2') mit dem zweiten Endgerät (3; 103);
**dadurch gekennzeichnet, dass**
das vom ersten Endgerät (2') erzeugte elektromagnetische Signal (S) während der Teilschritte des Abfragens und/oder Beantwortens die wiederaufladbare Batterie (11) des zweiten Endgerätes (3; 103) drahtlos auflädt.

2. Verfahren nach Anspruch 1, wobei das Überwachungssystem (1) eine Vielzahl von zweiten Endgeräten (3; 103) umfasst, wobei jedes zweite Endgerät (3; 103) Daten mit dem ersten Endgerät (2; 2'; 2") über einen jeweiligen drahtlosen Kommunikationsabschnitt (137) austauscht.

3. Verfahren nach einem der vorhergehenden Ansprüche, wobei das Überwachungssystem (1) ein drittes Endgerät (60; 600) umfasst, das einen dritten NFC-Sender/Empfänger (19'') umfasst; insbesondere umfasst das dritte Endgerät (60) eine Hardwareplattform, die zum Aufladen des zweiten Endgerätes (3; 103) konfiguriert ist; vorzugsweise ist die Hardwareplattform auch zum Austauschen von Daten mit dem zweiten Endgerät (3; 103) konfiguriert.

4. Verfahren nach einem der vorhergehenden Ansprüche, wobei der drahtlose Kommunikationsabschnitt (137) ein mobiles Endgerät, insbesondere eine Funkschnittstelle wie Bluetooth oder eine tatsächliche oder virtuelle SIM-Karte (22), umfasst, die konfiguriert ist, um mit dem Schnittstellenzugang eines Transportnetzwerks (T), insbesondere eines Telekommunikationsnetzwerks, zu kommunizieren; insbesondere ist das Transportnetzwerk (T) ein Netzwerk, das ausgewählt ist aus: Festnetztelefonnetzwerk, Mobiltelefonnetzwerk, Datennetzwerk, Internetnetzwerk, GSM, GPRS, UMTS/EDGE, VSF-Spread, OFDM, GPS.

5. Verfahren nach einem der vorhergehenden Ansprüche, wobei jedes Befestigungselement (3; 103) ein Energiegewinnungssystem (13) umfasst, das so konfiguriert ist, dass es eine Energiequelle in elektrische Energie umwandelt; wobei die Leiterplatte (12) durch das Energiegewinnungssystem (13) mit Strom versorgt wird; insbesondere ist die Leiterplatte (12) zumindest teilweise innerhalb eines Gehäuses (7, 8) des Befestigungselements (3; 103) angeordnet.

6. Befestigungselement, insbesondere eine Schraube, das im Gebrauch zwei oder mehrere Komponenten (E, C) einer mechanischen Vorrichtung miteinander befestigen kann; wobei das Befestigungselement (3; 103) eine Leiterplatte (12) umfasst, die mit einem oder mehreren Sensoren (9) verbunden ist, von denen jeder Signale in Abhängigkeit von den Arbeitsbedingungen der Komponenten (E, C) einer mechanischen Vorrichtung erzeugt; wobei die Leiterplatte (12) einen Mikroprozessor (10), eine drahtlos wiederaufladbare Batterie (11) und einen drahtlosen Kommunikationsabschnitt (137) umfasst, der konfiguriert ist, um im Gebrauch Daten und elektromagnetische Signale (2) drahtlos mit einem Endgerät (2; 2'; 2'') direkt und/oder indirekt auszutauschen, nämlich über ein Transportnetzwerk (T), insbesondere ein Telekommunikationsnetzwerk; wobei der drahtlose Kommunikationsabschnitt (137) einen NFC-Sender/Empfänger (19) umfasst, der mit der wiederaufladbaren Batterie (11) verbunden ist und so konfiguriert ist, dass er im Gebrauch sowohl elektromagnetische Energie als auch Daten von anderen NFC-Sendern/Empfängern (19'; 19'') anderer Geräten empfängt, wobei das Befestigungselement das Befestigungselement ist, das im Überwachungsverfahren nach einem der vorhergehenden Ansprüche verwendet wird.

7. Befestigungselement, insbesondere eine Schraube, nach Anspruch 6, wobei der drahtlose Kommunikationsabschnitt (137) ein mobiles Endgerät, insbesondere eine Funkschnittstelle, wie Bluetooth BLE oder eine tatsächliche oder virtuelle SIM-Karte (22), umfasst, die dazu konfiguriert ist, mit dem Schnittstellenzugang eines Transportnetzwerks (T), insbesondere Telekommunikationsnetzwerken, zu kommunizieren.

8. Befestigungselement, insbesondere eine Schraube, nach Anspruch 7, wobei die Funkschnittstelle so konfiguriert ist, dass sie auf ein Transportnetzwerk (T) zugreift, insbesondere auf ein Netzwerk, das ausgewählt ist aus: Festnetztelefonnetzwerk, Mobiltelefonnetzwerk, Datennetzwerk, Internetnetzwerk, GSM, GPRS, UMTS/EDGE, VSF-Spread, OFDM, GPS.

9. Befestigungselement nach einem der Ansprüche 6 bis 8, und umfassend ein oder mehrere Energiegewinnungssysteme (13), von denen jedes so konfiguriert ist, dass es eine Energiequelle in elektrische Energie umwandelt, wobei jedes Energiegewinnungssystem (13) die Sensoren (9) und/oder die Leiterplatte (12) und/oder eine Speichereinheit (11) versorgt.

10. Befestigungselement nach einem der Ansprüche 6 bis 9, und umfassend einen Schaft (4) mit einer Längsachse (X) und einen Kopf (6) mit einem Gehäuse (8); wobei das Befestigungselement (3; 103) ein hermetisches Gehäuse (50) aus steifem Material und zumindest teilweise dielektrischem Material umfasst; das in das Gehäuse (8) eingesetzt ist; wobei die Leiterplatte (12) in das Gehäuse (50) eingesetzt ist; wobei in dem Gehäuse (50) ein oder mehrere Sensoren (9), insbesondere ein Beschleunigungsmesser, untergebracht sind.

11. Befestigungselement nach Anspruch 10, wobei das Gehäuse (50) LEDs (51, 52) umfasst, die von außen sichtbar sind und innen mit der Leiterplatte (12) verbunden sind.

12. Befestigungselement nach Anspruch 10 oder 11, wobei der Schaft (4) massiv ist, d.h. keine inneren Hohlräume aufweist.

13. Befestigungselement nach einem der Ansprüche 6 bis 12, wobei das Befestigungselement einen Hohlraum (7, 8) innerhalb des Schafts (4) aufweist; wobei innerhalb des Hohlraums (7, 8) zumindest teilweise Folgendes untergebracht ist: die Sensoren (9); und/oder die Energiegewinnungssysteme (13); und/oder die Leiterplatte (12).

14. Überwachungssystem mit einem ersten Endgerät (2; 2'; 2'') und einem oder mehreren zweiten Endgeräten (3; 103), von denen jedes ein Befestigungselement nach einem der Ansprüche 6 bis 13 ist; wobei das erste Endgerät (2; 2'; 2'') und jedes zweite Endgerät (3; 103) dazu konfiguriert sind, Daten und elektromagnetische Signale (S) drahtlos direkt und/oder indirekt, nämlich über ein Transportnetzwerk (T), insbesondere ein Telekommunikationsnetzwerk, auszutauschen; wobei das vom ersten Endgerät (2') erzeugte elektromagnetische Signal (S) die wiederaufladbare Batterie (11) des zweiten Endgerätes (3; 103) drahtlos auflädt.

15. Überwachungssystem nach Anspruch 14 und umfassend ein drittes Endgerät (60; 600), das einen zusätzlichen NFC-Sender/Empfänger (19'') umfasst.

16. Überwachungssystem nach Anspruch 15, wobei das dritte Endgerät (60) eine Hardwareplattform umfasst, die so konfiguriert ist, dass sie das zweite Endgerät (3; 103) auflädt; vorzugsweise ist die Hardwareplattform auch so konfiguriert, dass sie Daten mit dem zweiten Endgerät (3; 103) austauscht.

17. Überwachungssystem nach einem der Ansprüche 14 bis 16, wobei das erste Endgerät (2; 2'; 2") in einem Smartphone oder einem Mobilgerät (600) oder einem Werkzeug, insbesondere einem Werkzeug (U) zum Festziehen des zweiten Endgerätes (3; 103), enthalten ist.

## Revendications

1. Procédé de surveillance au moyen d'un système de surveillance (1) comprenant un premier dispositif terminal (2 ; 2' ; 2'') et un deuxième dispositif terminal (3 ; 103) ; dans lequel ledit deuxième dispositif terminal (3 ; 103) comprend un dispositif de fixation, en particulier une vis, qui fixe ensemble, lors de l'utilisation, au moins deux composants (E, C) d'un appareil mécanique ; dans lequel ledit deuxième dispositif terminal (3 ; 103) comprend un ou plusieurs capteurs (9) et une carte de circuit imprimé (12) comprenant, à son tour, un microprocesseur (10) et une partie de communication sans fil (137), qui est configurée pour échanger sans fil des données et des signaux électromagnétiques (S) avec le premier dispositif terminal (2 ; 2' ; 2'') directement et/ou indirectement, à savoir via un réseau de transport (T), en particulier un réseau de télécommunications ; dans lequel lesdits capteurs (9) échangent des signaux avec ladite carte de circuit imprimé (12) du deuxième dispositif terminal (3 ; 103) ; le procédé comprenant les étapes consistant à : générer un ou plusieurs signaux au moyen desdits capteurs (9) en fonction des conditions de fonctionnement desdits composants (E, C) d'un appareil mécanique ; traiter lesdits signaux au moyen de ladite carte de circuit imprimé (12) pour générer des données ; échanger des données sans fil entre le premier dispositif terminal (2 ; 2' ; 2'') et le deuxième dispositif terminal (3 ; 103) directement et/ou indirectement, à savoir via un réseau de transport (T), en particulier un réseau de télécommunications ; dans lequel ledit premier dispositif terminal (2') comprend un premier émetteur/récepteur NFC (19') ; en particulier, ledit premier dispositif terminal (2') est inclus dans un smartphone ou un dispositif mobile (600) ou un outil, en particulier un outil (U) pour serrer ledit deuxième dispositif terminal (3 ; 103) ; dans lequel ladite partie de communication sans fil (137) du deuxième dispositif terminal (3 ; 103) comprend, en outre, une batterie rechargeable sans fil (11) et un deuxième émetteur/récepteur NFC (19) qui est connecté à la batterie rechargeable (11) et reçoit à la fois l'énergie électromagnétique et les données du premier émetteur/récepteur NFC ('19) ; dans lequel l'étape d'échange de données comprend les sous-étapes consistant à : interroger le deuxième dispositif terminal (3 ; 103) via le premier dispositif terminal (2') ; répondre au premier dispositif terminal (2') à l'aide du deuxième dispositif terminal (3 ; 103) ;
**caractérisé en ce que**,
pendant les sous-étapes d'interrogation et/ou de réponse, le signal électromagnétique (S) généré par le premier dispositif terminal (2') charge sans fil la batterie rechargeable (11) du deuxième dispositif terminal (3 ; 103).

2. Procédé selon la revendication 1, dans lequel le système de surveillance (1) comprend une pluralité desdits deuxièmes dispositifs terminaux (3 ; 103), dans lequel chaque deuxième dispositif terminal (3 ; 103) échange des données avec le premier dispositif terminal (2 ; 2' ; 2") par l'intermédiaire d'une partie de communication sans fil (137) respective.

3. Procédé selon l'une quelconque des revendications précédentes, dans lequel le système de surveillance (1) comprend un troisième dispositif terminal (60 ; 600), qui comprend un troisième émetteur/récepteur NFC (19'') ; en particulier, ledit troisième dispositif terminal (60) comprend une plateforme matérielle configurée pour recharger le deuxième dispositif terminal (3 ; 103) ; de préférence, ladite plateforme matérielle est également configurée pour échanger des données avec ledit deuxième dispositif terminal (3 ; 103).

4. Procédé selon l'une quelconque des revendications précédentes, dans lequel ladite partie de communication sans fil (137) comprend un terminal mobile, en particulier une interface radio comme Bluetooth ou une carte SIM réelle ou virtuelle (22), configurée pour communiquer avec l'interface d'accès d'un réseau de transport (T), en particulier un réseau de télécommunications ; en particulier, le réseau de transport (T) est un réseau choisi parmi : un réseau téléphonique fixe, un réseau téléphonique cellulaire, un réseau de données, un réseau Internet, GSM, GPRS, UMTS/EDGE, VSF-Spread, OFDM, GPS.

5. Procédé selon l'une quelconque des revendications précédentes, dans lequel chaque dispositif de fixation (3 ; 103) comprend un système de collecte d'énergie (13) qui est configuré pour convertir en énergie électrique une source d'énergie ; dans lequel ladite carte de circuit imprimé (12) est alimentée électriquement par ledit système de collecte d'énergie (13) ; en particulier, ladite carte de circuit imprimé (12) est disposée, au moins partiellement, à l'intérieur d'un boîtier (7, 8) du dispositif de fixation (3 ; 103).

6. Dispositif de fixation, en particulier une vis, qui peut fixer ensemble, lors de l'utilisation, au moins deux composants (E, C) d'un appareil mécanique ; dans lequel ledit dispositif de fixation ( 3 ; 103) comprend une carte de circuit imprimé (12) connectée à un ou plusieurs capteurs (9), dont chacun génère des signaux en fonction des conditions de fonctionnement desdits composants (E, C) d'un appareil mécanique ; dans lequel ledit circuit imprimé (12) comprend un microprocesseur (10), une batterie rechargeable sans fil (11) et une partie de communication sans fil (137) configurée pour échanger, lors de l'utilisation, des données et des signaux électromagnétiques (2) sans fil avec un dispositif terminal (2 ; 2' ; 2'') directement et/ou indirectement, à savoir par l'intermédiaire d'un réseau de transport (T), en particulier un réseau de télécommunications ; dans lequel ladite partie de communication sans fil (137) comprend un émetteur/récepteur NFC (19) qui est connecté à la batterie rechargeable (11) et qui est configuré pour recevoir, lors de l'utilisation, à la fois de l'énergie électromagnétique et des données provenant d'autres émetteurs/récepteurs NFC (19' ; 19'') d'autres dispositifs, dans lequel le dispositif de fixation est le dispositif de fixation utilisé dans le procédé de surveillance selon l'une quelconque des revendications précédentes.

7. Dispositif de fixation, en particulier une vis, selon la revendication 6, dans lequel ladite partie de communication sans fil (137) comprend un dispositif terminal mobile, en particulier une interface radio, telle que Bluetooth BLE ou une carte SIM réelle ou virtuelle (22), qui est configurée pour communiquer avec l'interface d'accès d'un réseau de transport (T), en particulier des réseaux de télécommunications.

8. Dispositif de fixation, en particulier une vis, selon la revendication 7, dans lequel ladite interface radio est configurée pour accéder à un réseau de transport (T), en particulier un réseau choisi parmi : un réseau téléphonique fixe, un réseau téléphonique cellulaire, un réseau de données, un réseau Internet, GSM, GPRS, UMTS/EDGE, VSF-Spread, OFDM, GPS.

9. Dispositif de fixation selon l'une quelconque des revendications 6 à 8 et comprenant un ou plusieurs systèmes de collecte d'énergie (13) dont chacun est configuré pour convertir en énergie électrique une source d'énergie ; dans lequel chaque système de collecte d'énergie (13) alimente lesdits capteurs (9) et/ou ladite carte de circuit imprimé (12) et/ou une unité de stockage (11).

10. Dispositif de fixation selon l'une quelconque des revendications 6 à 9 et comprenant une tige (4) ayant un axe longitudinal (X) et une tête (6) ayant un boîtier (8) ; dans lequel ledit dispositif de fixation (3 ; 103) comprend un boîtier (50) hermétique fabriqué à partir d'un matériau rigide et au moins partiellement diélectrique ; qui est inséré à l'intérieur dudit boîtier (8) ; dans lequel ladite carte de circuit imprimé (12) est insérée à l'intérieur dudit boîtier (50) ; dans lequel à l'intérieur dudit boîtier (50) sont logés un ou plusieurs capteurs (9), en particulier un accéléromètre.

11. Dispositif de fixation selon la revendication 10, dans lequel ledit boîtier (50) comprend des DEL (51, 52) visibles de l'extérieur et connectées, en interne, à ladite carte de circuit imprimé (12).

12. Dispositif de fixation selon la revendication 10 ou 11, dans lequel la tige (4) est solide, c'est-à-dire qu'elle ne présente pas de cavités internes.

13. Dispositif de fixation selon l'une quelconque des revendications 6 à 12, dans lequel ledit dispositif de fixation présente une cavité (7, 8) à l'intérieur de la tige (4) ; dans lequel, à l'intérieur de ladite cavité (7, 8), les éléments suivants sont au moins partiellement logés : lesdits capteurs (9) ; et/ou lesdits systèmes de collecte d'énergie (13) ; et/ou ladite carte de circuit imprimé (12).

14. Système de surveillance comprenant un premier dispositif terminal (2 ; 2' ; 2'') et un ou plusieurs deuxièmes dispositifs terminaux (3 ; 103), dont chacun est un dispositif de fixation selon l'une quelconque des revendications 6 à 13 ; dans lequel le premier dispositif terminal (2 ; 2' ; 2") et chaque deuxième dispositif terminal (3 ; 103) sont configurés pour échanger des données et des signaux électromagnétiques (S) sans fil directement et/ou indirectement, à savoir via un réseau de transport (T), en particulier un réseau de télécommunications ; dans lequel le signal électromagnétique (S) généré par le premier dispositif terminal (2') charge sans fil la batterie rechargeable (11) du deuxième dispositif terminal (3 ; 103).

15. Système de surveillance selon la revendication 14, comprenant un troisième dispositif terminal (60 ; 600) qui comprend un émetteur/récepteur NFC (19'') supplémentaire.

16. Système de surveillance selon la revendication 15, dans lequel ledit troisième dispositif terminal (60) comprend une plateforme matérielle configurée pour recharger le deuxième dispositif terminal (3 ; 103) ; de préférence, ladite plateforme matérielle est également configurée pour échanger des données avec ledit deuxième dispositif terminal (3 ; 103).

17. Système de surveillance selon l'une quelconque des revendications 14 à 16, dans lequel ledit premier dispositif terminal (2 ; 2' ; 2'' ) est inclus dans un smartphone ou un dispositif mobile (600) ou un outil, en particulier un outil (U) pour serrer ledit deuxième dispositif terminal (3 ; 103).
